# FASCICULE DE BREVET EUROPEEN

(11) **EP 3 580 095 B1**
(45) Date de publication et mention de la délivrance du brevet: **18.11.2020**
(21) Numéro de dépôt: 18705705.4
(22) Date de dépôt: 31.01.2018
(51) Int. Cl.: B60Q 3/217, B60Q 3/54, F16B 5/12, B60R 13/02

(54) **GARNITURE DE PORTE DE VEHICULE AUTOMOBILE INTEGRANT UN DISPOSITIF D'ECLAIRAGE D'AMBIANCE**
KRAFTFAHRZEUGTÜRVERKLEIDUNG MIT EINER UMGEBUNGSBELEUCHTUNGSVORRICHTUNG
MOTOR VEHICLE DOOR TRIM INCORPORATING AN AMBIENT LIGHTING DEVICE

(30) Priorité: 13.02.2017 FR 1751142
(43) Date de publication de la demande: 18.12.2019
(73) Titulaire: PSA Automobiles SA, 78300 Poissy (FR)
(72) Inventeur: SCHNURIGER, Damien, 91300 Massy (FR); NORAIS, Marc, 78500 Sartrouville (FR)
(86) Numéro de dépôt international: PCT/FR2018/050232
(87) Numéro de publication internationale: WO 2018/146397

(56) Documents cités:
- DE-A1-102010 053 061
- DE-A1-102015 203 971
- FR-A1- 3 004 682
- US-A- 5 188 408

## Description

### Domaine de l'invention

La présente invention concerne d'une manière générale le domaine de l'éclairage d'ambiance pour véhicules automobiles.

Elle vise en particulier une garniture de porte d'un véhicule automobile dotée d'un dispositif d'éclairage d'ambiance.

### Arrière-plan de l'invention

Le temps moyen passé dans les véhicules automobiles ne cessant d'augmenter, les constructeurs automobiles cherchent en permanence à améliorer le confort de bord et la qualité de vie des passagers durant ces phases de mobilité.

Dans ce contexte, ces dernières années ont vu l'apparition, dans l'habitacle des véhicules automobiles haut de gamme, de dispositifs d'éclairage visant à générer une ambiance d'apaisement et de bien-être à bord et permettant en outre de fournir aux passagers un minimum de luminosité de nuit ou dans la pénombre, de sorte qu'ils n'aient pas à actionner le plafonnier dont la forte luminosité peut perturber la vision du conducteur, notamment durant les phases de conduite.

Pour satisfaire ces deux critères, ces dispositifs d'éclairage d'ambiance sont souvent implantés dans des endroits stratégiques du véhicule tels que la planche de bord, le pavillon de toit ou encore les garnitures des portes latérales.

Une telle garniture de porte comporte classiquement un panneau porteur sur lequel est rapporté un ou plusieurs enjoliveurs couvrant certaines portions de la face de ce panneau donnant sur l'habitacle du véhicule.

On connaît de la demande japonaise JP 2002/347515, un dispositif d'éclairage pour garniture de porte comportant des moyens d'éclairage montés sur un support plastique doté de pattes de fixation élastiques permettant son encliquetage sur le pourtour d'une ouverture pratiquée dans le panneau porteur. Le document DE102015203971 A1 divulgue une garniture de porte d'après le préambule de la revendication 1.

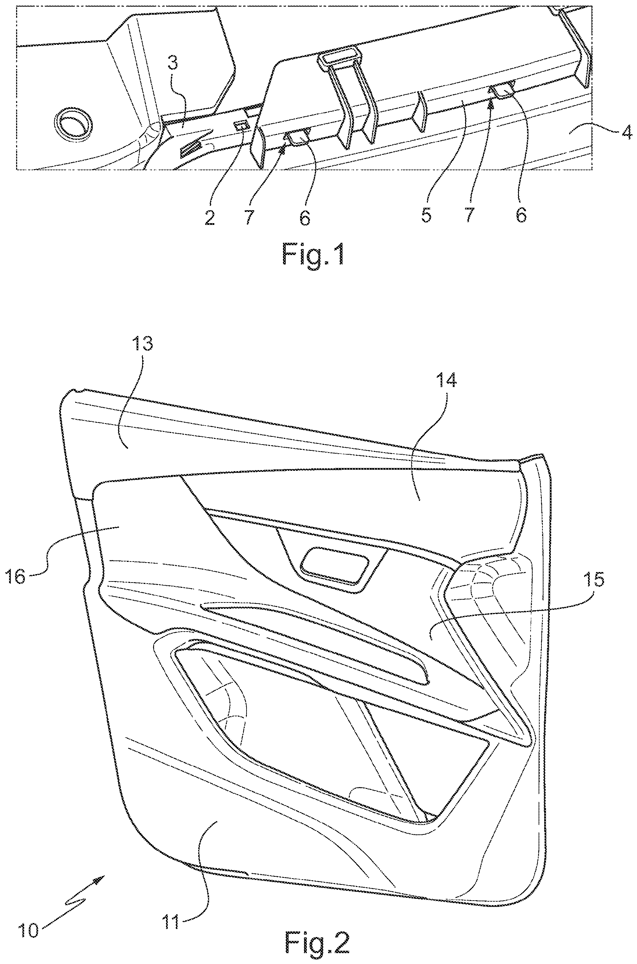

La figure 1 montre un autre type de dispositif d'éclairage d'ambiance pour garniture de porte comportant des moyens lumineux 2 montés sur un support 3 fixé sur une embase de réception 5 ménagée ce panneau porteur 4 et venue de moulage avec lui.

Pour assurer sa fixation, le support 3 est doté de pattes élastiques 6 coopérant par encliquetage avec des fenêtres 7 pratiquées dans l'embase de réception 5.

D'une manière générale, la fixation de ces dispositifs d'éclairage d'ambiance nécessite la réalisation d'aménagement spécifiques sur le panneau porteur de la garniture de porte qui complexifient considérablement la conception des moules d'injection à partir desquels ces panneaux sont obtenus.

Les dimensions de ces derniers étant proches de celles des portes latérales, le surcoût induit par de tels aménagements s'avère loin d'être négligeable et peut être estimé à plusieurs dizaines de milliers d'euros rien que pour la conception des moules, sans compter les éventuels surplus de matière utilisé.

Seuls les véhicules haut de gamme étant équipés de tels dispositifs d'éclairage d'ambiance, ces aménagements spécifiques demeurent en outre souvent inusités sauf à concevoir des moules différents pour le panneau porteur en fonction des versions ce qui n'est pas économiquement viable.

### Objet et résumé de l'invention

La présente invention vise donc à palier à ces inconvénients.

Elle propose à cet effet une garniture de porte de véhicule automobile comportant un panneau porteur, un enjoliveur rapporté sur ledit panneau porteur de sorte à recouvrir au moins partiellement la face dudit panneau donnant sur l'habitacle dudit véhicule, ainsi qu'un dispositif d'éclairage d'ambiance comprenant des moyens d'éclairage destinés à illuminer la zone dudit habitacle environnant ladite garniture de porte et étant supportés au moins partiellement par une interface support solidaire dudit panneau porteur.

Elle comporte des organes de fixation s'étendant transversalement depuis ledit enjoliveur et traversant successivement ladite interface support et ledit panneau porteur au niveau d'orifices pratiqués dans ces deux éléments, les extrémités libres desdits organes de fixation présentant en outre des protubérances radiales coopérant en butée avec le pourtour desdits orifices ménagés dans ledit panneau porteur de sorte à retenir fermement l'empilement de ladite interface support et dudit panneau porteur contre ledit enjoliveur, et ladite interface support comporte des moyens aptes à assurer son pré-maintien sur ledit enjoliveur avant la fixation de ce dernier sur ledit panneau porteur.

Dans la garniture de porte selon l'invention, la solidarisation de l'interface support du dispositif d'éclairage d'ambiance au panneau porteur est réalisée grâce à la coopération entre les orifices ménagés dans cette interface et des organes de fixation de l'enjoliveur assurant également sa solidarisation sur ce panneau porteur.

Aucun aménagement spécifique n'est donc requis sur le panneau porteur pour y fixer ce dispositif d'éclairage d'ambiance, ce qui permet d'utiliser la même référence de pièce sur l'ensemble des versions d'un véhicule, qu'elles soient pourvues ou non d'un tel dispositif d'éclairage d'ambiance.

Selon des caractéristiques préférées de ladite garniture, prises seules ou en combinaison :
- lesdits organes de fixation comportent des pions cylindriques dont l'extrémité libre est bouterollée ;
- lesdits organes de fixation comportent des tiges dont les extrémités libres sont pourvues de dents d'encliquetage ;
- lesdits organes de fixation sont venus de moulage d'une seule pièce avec au moins une partie dudit enjoliveur ;
- lesdits moyens de pré-maintien comportent au moins une languette élastiquement déformable délimitant partiellement un dit orifice de ladite interface support et exerçant un effort d'appui contre ledit orifice de fixation traversant cet orifice ;
- lesdits moyens d'éclairage comportent une diode et un guide de lumière comprenant une partie sensiblement rectiligne supportée par ladite interface support et agencée de sorte à émettre un ruban lumineux le long de la bordure supérieure dudit enjoliveur ; et/ou
- ladite interface support comporte une gorge d'accueil recevant la partie sensiblement rectiligne dudit guide de lumière, ainsi qu'une paroi sensiblement plane prise en sandwich entre ledit panneau porteur et ledit enjoliveur, ladite paroi présentant une pluralité d'orifices traversés par lesdits organes de fixation.

L'invention vise également sous un deuxième aspect, une porte de véhicule automobile comportant une telle garniture.

L'invention vise enfin sous un troisième aspect, un véhicule automobile comportant une telle garniture.

### Brève description des dessins

L'exposé de l'invention sera maintenant poursuivi par la description détaillée d'un exemple de réalisation, donnée ci-après à titre illustratif mais non limitatif, en référence aux dessins annexés, sur lesquels :
- la figure 2 est une vue en perspective d'un garnissage de porte latérale de véhicule automobile selon l'invention ;
- la figure 3 représente une vue en coupe transversale du garnissage de porte de la figure 2 ;
- la figure 4 est une vue en perspective du dispositif d'éclairage d'ambiance intégré au garnissage de porte de la figure 2 ; et
- la figure 5 représente une vue en perspective de la partie supérieure du garnissage de porte de la figure 2, dépourvu de l'un de ses enjoliveurs et du dispositif d'éclairage d'ambiance afin de faciliter la compréhension de l'invention.

### Description détaillée d'un mode préféré de réalisation

La figure 2 représente un garnissage de porte latérale de véhicule automobile 10 selon l'invention, destiné à être fixée sur un caisson de porte non représenté.

Le garnissage 10 comporte un panneau porteur 11 venu de moulage d'une seule pièce à partir d'un matériau thermoplastique éventuellement renforcé de fibres naturelles ou synthétiques.

Ce garnissage 10 comprend également un bandeau supérieur 13, et une pluralité d'enjoliveurs 14, 15, 16 rapportés sur le panneau porteur 11 de sorte à recouvrir au moins partiellement la face de ce panneau donnant sur l'habitacle dudit véhicule.

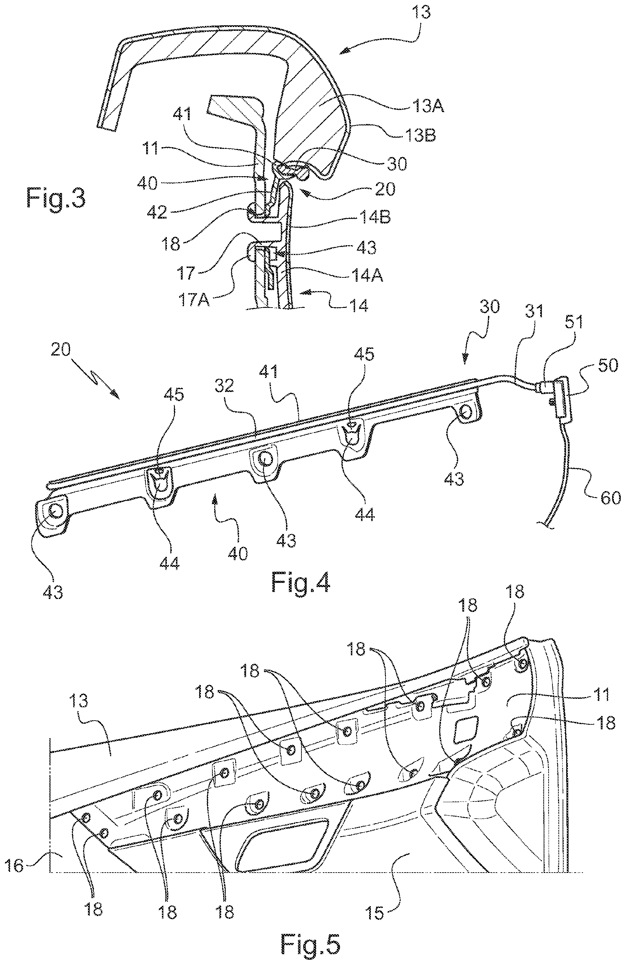

Comme illustré par la figure 3, le bandeau supérieur 13 est ici formé par un bloc de mousse 13A recouvert d'une peau de revêtement 13B en textile (tissé ou non), en cuir ou en matière synthétique et définissant une surface extérieure d'aspect. Il est par exemple appliqué sur le panneau porteur 11 par thermo-gainage de manière bien connue de l'homme du métier.

Le bloc de mousse 13A et la peau de revêtement 13B sont associées par l'une des différentes techniques bien connues de l'homme du métier telles que le flammage ou le collage par chauffage d'une colle préalablement interposée entre les deux.

Les enjoliveurs 14, 15, 16, sont ici constitués par des panneaux 14A venus de moulage à partir d'un matériau thermoplastique et recouverts d'une peau de revêtement 14B en textile (tissé ou non), en cuir ou en matière synthétique et définissant une surface extérieure d'aspect.

La fixation de ces enjoliveurs 14, 15, 16 sur le panneau porteur 11 est assurée par bouterollage ou rivetage à chaud.

Pour ce faire, chaque enjoliveur présente une pluralité d'organes de fixation formés par des pions cylindriques creux 17 s'étendant transversalement depuis sa face interne (l'un d'eux issu de l'enjoliveur supérieur 14 étant visible sur la figure 3) et traversant des orifices circulaires correspondants 18 ménagés dans le panneau porteur 11 (certains d'entre eux étant visibles sur les figures 3 et 5).

Comme illustré sur la figure 3, les extrémités libres de ces pions cylindriques 17 présentent des protubérances radiales 17A formées au moyen d'une bouterolle de sorte à empêcher tout retrait ultérieur des enjoliveurs 14, 15, 16.

Le garnissage 10 comprend en outre un dispositif d'éclairage d'ambiance 20 apte à générer un ruban lumineux le long de la bordure supérieure de l'enjoliveur 14.

Ce dispositif d'éclairage d'ambiance 20, représenté seul sur la figure 4, comporte des moyens d'éclairage comprenant une source lumineuse non visible sur les figures et un guide de lumière transparent 30 associé à cette source.

Le guide de lumière 30 comporte une partie cylindrique courbe 31 traversant le panneau porteur 11 au niveau d'une ouverture non visible sur les figures, et se prolongeant à l'une de ses extrémités par une partie sensiblement rectiligne 32 clipsée le long d'une gorge d'accueil 41 formant la bordure supérieure d'une interface support 40 en matière plastique.

Les rayons lumineux partiellement diffusés par ce guide de lumière 30 sur cette partie rectiligne forment ainsi un ruban de lumière continu illuminant la zone de l'habitacle du véhicule environnant la garniture de porte 10.

Le guide de lumière 30 est réalisé de préférence d'une seule pièce par moulage à partir d'un matériau thermoplastique transparent, éventuellement teinté dans la masse tel que le polycarbonate (PC) ou le polyméthacrylate de méthyle (PMMA).

La source lumineuse, constituée avantageusement par une diode lumineuse de type électroluminescente (LED) ou laser, est implantée sur une carte à circuits imprimés (ou PCB pour « Printed Circuit Board ») non visible sur les figures et logée dans un boîtier 50 en matière plastique.

Ce boîtier 50 est réalisé par exemple par l'assemblage de deux parties venues chacune de moulage à partir d'un polymère thermoplastique tel que le polyamide (PA), éventuellement chargé en fibres minérales de sorte à renforcer leur tenue mécanique.

La carte à circuits imprimés est reliée au circuit électrique du véhicule (non représenté sur les figures) par l'intermédiaire d'un faisceau d'alimentation 60.

Le boîtier 50 comporte un fût cylindrique 51 recevant le tronçon d'extrémité rectiligne de la partie cylindrique 31 du guide de lumière 30 de sorte à le coupler optiquement à la diode.

Les moyens d'éclairage comportent en outre avantageusement, un collimateur (non visible sur les figures) logé dans le fût cylindrique 51 du boîtier 50 entre la diode et le guide de lumière 30, et permettant d'orienter et de concentrer le faisceau lumineux issu de cette diode vers le guide 30.

Ces moyens d'éclairage peuvent également comprendre avantageusement une lentille diffusante disposée entre le collimateur et le guide de lumière 30.

L'interface support 40 présente, en dessous de la gorge 41 recevant le guide de lumière 30, une paroi principale sensiblement plane 42 prise en sandwich entre le panneau porteur 11 et l'enjoliveur 14 (figure 3).

Pour assurer la solidarisation de l'interface 40 (et donc celle du guide de lumière 30) sur le panneau porteur 11, la paroi 42 présente une pluralité d'orifices 43, 44 répartis sur sa longueur et traversés chacun par un pion 17 correspondant de l'enjoliveur 14.

Plus précisément, la paroi 42 présente trois orifices circulaires 43 dont le diamètre est légèrement supérieur à la section circulaire des pions 17, ainsi que deux orifices en forme de « tête de chat » 44 intercalés chacun entre deux orifices 43 et dont les dimensions sont légèrement inférieures à celles des pions 17.

Chaque orifice 44 est partiellement délimité par une languette 45 découpée dans la paroi 42 et apte à se déformer élastiquement pour permettre le passage à force d'un pion 17 au travers de cet orifice 44.

Comme illustré par la figure 3, les pions 17 traversent successivement la paroi 42 de l'interface support 40 et le panneau porteur 11, leurs protubérances radiales 17A coopérant en butée avec le pourtour des orifices 18 ménagés dans ce panneau porteur 11 de sorte à retenir fermement l'empilement de la paroi 42 de l'interface support 40 et du panneau porteur 11 contre l'enjoliveur 14.

On va maintenant décrire rapidement les opérations d'assemblage de l'ensemble constitué par le panneau porteur 11, l'interface support 40 supportant le guide de lumière 30 et l'enjoliveur 14.

En premier lieu, on positionne l'interface support 40 du dispositif d'éclairage d'ambiance 20 contre la face interne de l'enjoliveur 14 en enfilant ses orifices 43 et 44 sur les pions correspondant 17.

Une fois cette opération réalisée, les languettes 45 assurent alors un pré-maintien de cette interface 40 sur l'enjoliveur 14 en exerçant un effort d'appui sur les pions 17.

On amène ensuite le sous-ensemble interface support 40 - enjoliveur 14 à proximité de la face externe de panneau porteur 11, puis on insère l'ensemble des pions 17 de cet enjoliveur 14 au travers des orifices correspondants 18 de ce panneau 11.

La dernière opération consiste à bouteroller les extrémités saillantes de ces pions 17 au moyen d'une bouterolle exerçant une combinaison d'efforts axiaux et radiaux sur ces extrémités de sorte à l'écraser et à former les protubérances radiales 17A.

Selon des variantes de réalisation non représentés, les organes de fixation de l'enjoliveur 14 sont différents.

Ces derniers sont par exemple constitués par des tiges cylindriques traversant successivement l'interface support 40 et le panneau porteur 11 au niveau des orifices 43, 44 et 18 ménagés dans ces éléments, ces tiges présentant à leurs extrémités libres des dents radiales d'encliquetage coopérant en butée avec le pourtour des orifices 18 de sorte à retenir fermement l'empilage de l'interface support 40 et du panneau porteur 11 contre cet enjoliveur 14.

Selon d'autres variantes de réalisation non représentés, les moyens d'éclairage comportent plusieurs sources lumineuses et/ou ces dernières sont de type différent (par exemple, des tubes néon ou des ampoules classiques à filament).

Ces moyens d'éclairage peuvent également être dépourvus de guide de lumière tel que 30 et comprendre à la place d'autres moyens de propagation de la lumière.

Selon encore d'autres variantes de réalisation non représentées, l'interface support peut également être conformée différemment.

D'une manière générale, on rappelle que la présente invention ne se limite pas aux formes de réalisation décrites et représentées, mais englobe toute variante d'exécution à la portée de l'homme du métier.

## Revendications

1. Garniture de porte de véhicule automobile comportant un panneau porteur (11), un enjoliveur (14) rapporté sur ledit panneau porteur (11) de sorte à recouvrir au moins partiellement la face dudit panneau (11) donnant sur l'habitacle dudit véhicule, ainsi qu'un dispositif d'éclairage d'ambiance (20) comprenant des moyens d'éclairage (30) destinés à illuminer la zone dudit habitacle environnant ladite garniture de porte et étant supportés au moins partiellement par une interface support (40) solidaire dudit panneau porteur (11) ; comportant des organes de fixation (17) s'étendant transversalement depuis ledit enjoliveur (14) et traversant successivement ladite interface support (40) et ledit panneau porteur (11) au niveau d'orifices (43, 44, 18) pratiqués dans ces deux éléments, les extrémités libres desdits organes de fixation (17) présentant en outre des protubérances radiales (17A) coopérant en butée avec le pourtour desdits orifices (18) ménagés dans ledit panneau porteur (11) de sorte à retenir fermement l'empilement de ladite interface support (40) et dudit panneau porteur (11) contre ledit enjoliveur (14), **caractérisée en ce que** ladite interface support (40) comporte des moyens (45) aptes à assurer son pré-maintien sur ledit enjoliveur (14) avant la fixation de ce dernier sur ledit panneau porteur.

2. Garniture de porte de véhicule automobile selon la revendication 1, **caractérisé en ce que** lesdits organes de fixation comportent des pions cylindriques (17) dont l'extrémité libre est bouterollée.

3. Garniture de porte de véhicule automobile selon la revendication 1, **caractérisé en ce que** lesdits organes de fixation comportent des tiges dont les extrémités libres sont pourvues de dents d'encliquetage.

4. Garniture de porte de véhicule automobile selon l'une des revendications 1 à 3, **caractérisé en ce que** lesdits organes de fixation sont venus de moulage d'une seule pièce avec au moins une partie (14A) dudit enjoliveur (14).

5. Garniture de porte de véhicule automobile selon la revendication 4, **caractérisé en ce que** lesdits moyens de pré-maintien comportent au moins une languette élastiquement déformable (45) délimitant partiellement un dit orifice (44) de ladite interface support (40) et exerçant un effort d'appui contre ledit organe de fixation (17) traversant cet orifice (44).

6. Garniture de porte de véhicule automobile selon l'une des revendications 1 à 5, **caractérisé en ce que** lesdits moyens d'éclairage comportent une diode et un guide de lumière (30) comprenant une partie sensiblement rectiligne supportée par ladite interface support (40) et agencée de sorte à émettre un ruban lumineux le long de la bordure supérieure dudit enjoliveur (14).

7. Garniture de porte de véhicule automobile selon la revendication 6, **caractérisé en ce que** ladite interface support (40) comporte une gorge d'accueil (41) recevant la partie sensiblement rectiligne (32) dudit guide de lumière (30), ainsi qu'une paroi sensiblement plane (42) prise en sandwich entre ledit panneau porteur (11) et ledit enjoliveur (14), ladite paroi (42) présentant une pluralité de dits orifices (43, 44) traversés par lesdits organes de fixation (17).

8. Porte de véhicule automobile comportant une garniture selon l'une des revendications 1 à 7.

9. Véhicule automobile comportant une garniture de porte selon l'une des revendications 1 à 7.

## Patentansprüche

1. Kraftfahrzeugtürverkleidung mit einer Trägerplatte (11), einer auf der Trägerplatte (11) angebrachten Kappe (14), um die auf dem Innenraum des Kraftfahrzeugs liegende Fläche der Platte (11) zumindest teilweise zu bedecken, sowie einer Umgebungsbeleuchtungseinrichtung (20) mit Beleuchtungseinrichtung (30) zur Beleuchtung des Bereichs der Platte Ein Fahrgastraum, der die Türverkleidung umgibt und zumindest teilweise von einer Tragfläche (40) getragen wird, die mit der Tragplatte (11) verbunden ist;
Mit Befestigungselementen (17), die sich quer von der Kappe (14) erstrecken und nacheinander die Trägerschnittstelle (40) und die Trägerplatte (11) an Öffnungen (43, 44, 18) in diesen beiden Elementen durchdringen, wobei die freien Enden der Befestigungselemente (17) weiterhin radiale Vorsprünge (17A) aufweisen in Anlage mit dem Umfang der Öffnungen (18) in der Trägerplatte (11), um den Stapel der Trägerschnittstelle (40) und der Trägerplatte (11) gegen die Kappe (14) fest zu halten,
**Dadurch gekennzeichnet, dass** die Trägerschnittstelle (40) Mittel (45) aufweist, die ihre Vorhaltung auf der Kappe (14) vor deren Befestigung auf der Trägerplatte gewährleisten.

2. Kraftfahrzeugtürverkleidung nach Anspruch 1, **dadurch gekennzeichnet, dass** die Befestigungselemente zylindrische Zapfen (17) aufweisen, deren freies Ende aufgeschraubt ist.

3. Kraftfahrzeugtürverkleidung nach Anspruch 1, **dadurch gekennzeichnet, dass** die Befestigungselemente Stangen aufweisen, deren freie Enden mit Rastzähnen versehen sind.

4. Kraftfahrzeugtürverkleidung nach einem der Ansprüche 1 bis 3, **dadurch gekennzeichnet, dass** die Befestigungselemente einstückig mit mindestens einem Teil (14A) der Kappe (14) geformt sind.

5. Kraftfahrzeugtürverkleidung nach Anspruch 4, **dadurch gekennzeichnet, dass** die Vorhaltemittel mindestens eine elastisch verformbare Lasche (45) aufweisen, die teilweise eine Ausformung (44) der Trägerschnittstelle (40) begrenzt und eine Stützkraft gegen das Befestigungselement (17) ausübt, das durch diese Öffnung (44) hindurchtritt.

6. Kraftfahrzeugtürverkleidung nach einem der Ansprüche 1 bis 5, **dadurch gekennzeichnet, dass** die Beleuchtungsmittel eine Diode und einen Lichtleiter (30) umfassen, die einen im Wesentlichen geradlinigen Abschnitt umfassen, der von der Trägerschnittstelle (40) getragen wird und so angeordnet ist, dass er ein Lichtband entlang der oberen Kante der Verkleidung (14) abgibt.

7. Kraftfahrzeugtürverkleidung nach Anspruch 6, **dadurch gekennzeichnet, dass** die Tragfläche (40) eine Aufnahmenut (41), die den im Wesentlichen geradlinigen Abschnitt (32) des Lichtleiters (30) aufnimmt, sowie eine im Wesentlichen ebene Wand (42) aufweist, die zwischen der Tragplatte (11) und der Kappe (14) angeordnet ist eine Vielzahl von Öffnungen (43, 44) aufweist, die von den Befestigungselementen (17) durchsetzt sind.

8. Kraftfahrzeugtür mit einer Verkleidung nach einem der Ansprüche 1 bis 7.

9. Kraftfahrzeug mit einer Türverkleidung nach einem der Ansprüche 1 bis 7.

## Claims

1. Motor vehicle door fitting with a carrier sign (11), a hubber (14) reported on the said carrier sign (11) so as to cover at least part of the face of the said sign (11) overlooking the passenger compartment of the vehicle, and an ambient lighting device (20) containing means of lighting (30) intended to illuminate the area of the said passenger compartment Having regard to the said door trim and being supported at least partially by a supporting interface (40) which supports the said carrier sign (11); Containing fixing organs (17) extending transversely from the said embellisher (14) and passing successively through the said support interface (40) and the said carrier panel (11) at the level of holes (43, 44, 18) practiced in these two elements, the free ends of the said fixing organs (17) also having radial protuberances (17A) co-operating in stop with the circumference of the said orifices (18) housed in the said wearer sign (11) so as to firmly hold the stacking of the said support interface (40) and of the said wearer sign (11) against the said wearer (14), **characterized in that** the so-called support interface (40) has means (45) capable of securing its pre-maintenance on the said embellishment (14) before the latter is fixed on the said carrier panel.

2. Motor vehicle door fitting according to Claim 1, characterized as these fastening components have cylindrical pawns (17) with a buckle-free end.

3. Motor vehicle door fitting in accordance with Claim 1, **characterized by** the fact that the said fasteners include rods with loose ends fitted with lining teeth.

4. Motor vehicle door fitting in accordance with one of the claims 1 to 3, **characterized by** the fact that the said fasteners came from molding of one piece with at least one part (14A) of the said hubbub (14).

5. Motor vehicle door fitting according to Claim 4, characterized that the said pre-maintenance means include at least one elastically deformable tab (45) partially removing a said source (44) from the said support interface (40) and exerting an effort to support the said fixing device (17) through that port (44).

6. Motor vehicle door fitting in accordance with one of the claims 1 to 5, **characterized by** the fact that the said means of lighting include a diode and a light guide (30) comprising a substantially straight part supported by the said support interface (40) and arranged so as to emit a luminous ribbon along the upper edge of the said embellishment (14).

7. Motor vehicle door fitting in accordance with claim 6, **characterized by** the said support interface (40) having a welcoming throat (41) receiving the substantially straight part (32) of the said light guide (30), and a substantially flat wall (42) sandwiched between the said carrier sign (11) and the said embellishman (14), said wall (42) having a plurality of so-called orifices (43, 44) crossed by the said fixing organs (17).

8. Motor vehicle door with trim according to one of claims 1 to 7.

9. Motor vehicle with door trim according to one of the claims 1 to 7.
